# EUROPEAN PATENT SPECIFICATION

(11) **EP 3 940 606 B1**
(45) Date of publication and mention of the grant of the patent: **05.03.2025**
(21) Application number: 21184650.6
(22) Date of filing: 01.04.2016
(51) Int. Cl.: G06N 3/063, G06N 3/084, G06N 3/048, G06N 5/00, G06F 13/28

(54) **DEVICE AND METHOD FOR PERFORMING BACKPROPAGATION OF ARTIFICIAL NEURAL NETWORK**
VORRICHTUNG UND VERFAHREN ZUR AUSFÜHRUNG EINES UMKEHRTRAININGS EINES KÜNSTLICHEN NEURONALEN NETZES
DISPOSITIF ET PROCÉDÉ PERMETTANT D'EXÉCUTER UN APPRENTISSAGE INVERSÉ D'UN RÉSEAU DE NEURONES ARTIFICIELS

(30) Priority: 20.01.2016 CN 201610039032
(43) Date of publication of application: 19.01.2022
(62) Divisional of application: 16885905.6
(73) Proprietor: Cambricon Technologies Corporation Limited, Beijing 100191 (CN)
(72) Inventor: Shaoli, LIU, Beijing, 100191 (CN); Qi, GUO, Beijing, 100191 (CN); Yunji, CHEN, Beijing, 100191 (CN); Tianshi, CHEN, Beijing, 100191 (CN)
(74) Representative: Huang, Liwei

(56) References cited:
- EP-A1- 3 407 265
- WO-A1-2017/124644
- P.O. DOMINGOS ET AL: "An efficient and scalable architecture for neural networks with backpropagation learning", PROCEEDINGS / 2005 INTERNATIONAL CONFERENCE ON FIELD PROGRAMMABLE LOGIC AND APPLICATIONS (FPL) : TAMPERE HALL, TAMPERE, FINLAND, AUGUST 24 - 26, 2005, 1 January 2005 (2005-01-01), Piscataway, NJ, pages 89 - 94, XP055606447, ISBN: 978-0-7803-9362-2, DOI: 10.1109/FPL.2005.1515704
- RAMÓN J ALIAGA ET AL: "System-on-Chip Implementation of Neural Network Training on FPGA", INTERNATIONAL JOURNAL ON ADVANCES IN SYSTEMS AND MEASUREMENTS, vol. 2, no. 1, 30 June 2009 (2009-06-30), XP055604241
- LIU DAOFU LIUDAOFU@ICT AC CN ET AL: "PuDianNao A Polyvalent Machine Learning Accelerator", PROCEEDINGS OF THE TWENTIETH INTERNATIONAL CONFERENCE ON ARCHITECTURAL SUPPORT FOR PROGRAMMING LANGUAGES AND OPERATING SYSTEMS, ASPLOS '15, MARCH 14-18, 2015, ISTANBUL, TURKEY, ACMPUB27, NEW YORK, NY, USA, 14 March 2015 (2015-03-14), pages 369 - 381, XP058505961, ISBN: 978-1-4503-2835-7, DOI: 10.1145/2694344.2694358
- TIANSHI CHEN ET AL: "DianNao: A Small-Footprint High-Throughput Accelerator for Ubiquitous Machine-Learning", 1 March 2014 (2014-03-01), XP055422053, Retrieved from the Internet <URL:http://novel.ict.ac.cn/ychen/pdf/DianNao.pdf> [retrieved on 20171106], DOI: 10.1145/http://dx.doi.org/10.1145/2541940.2541967
- JIANTAO QIU ET AL: "Going Deeper with Embedded FPGA Platform for Convolutional Neural Network", PROCEEDINGS OF THE 2016 ACM/SIGDA INTERNATIONAL SYMPOSIUM ON FIELD-PROGRAMMABLE GATE ARRAYS, FPGA '16, 1 January 2016 (2016-01-01), New York, New York, USA, pages 26 - 35, XP055423746, ISBN: 978-1-4503-3856-1, DOI: 10.1145/2847263.2847265
- YU QI ET AL: "A Deep Learning Prediction Process Accelerator Based FPGA", 2015 15TH IEEE/ACM INTERNATIONAL SYMPOSIUM ON CLUSTER, CLOUD AND GRID COMPUTING, IEEE, 4 May 2015 (2015-05-04), pages 1159 - 1162, XP033171860, DOI: 10.1109/CCGRID.2015.114
- KLAPURI H ET AL: "MAPPING ARTIFICIAL NEURAL NETWORKS TO A TREE SHAPE NEUROCOMPUTER", MICROPROCESSORS AND MICROSYSTEMS, IPC BUSINESS PRESS LTD. LONDON, GB, vol. 20, no. 5, 1 September 1996 (1996-09-01), pages 267 - 276, XP000639808, ISSN: 0141-9331, DOI: 10.1016/0141-9331(96)01091-5

## Description

### TECHNICAL FIELD

The present disclosure relates to artificial neural network, and specifically to device and a method for performing backpropagation of an artificial neural network.

### BACKGROUND

Multilayer artificial neural networks are widely used in the fields such as pattern recognition, image processing, function approximation, and computation optimization.

Recently, multilayer artificial neural networks have attracted much attention from the academia and industry due to their good recognition accuracy and parallelism.

A known method for supporting backpropagation of a multilayer artificial neural network is to use a general purpose processor. The method executes general purpose instructions using a general purpose register file and a general purpose functional unit to support the algorithm. One of the defects of the method is low operational performance of a single general purpose processor, which cannot meet the performance requirement for usual multilayer neural network operations. When a plurality of general purpose processors perform execution in parallel, the intercommunication among the general purpose processors becomes a performance bottleneck. In addition, a general purpose processor needs to decode a multilayer artificial neural network backward operation into a long queue of operations and access instruction sequences, and a front-end decoding on the processor brings about high power consumption.

Another known method for supporting a multilayer artificial neural network backpropagation is to use a graphics processing unit (GPU). The method supports the algorithm by executing general purpose SIMD (Single Instruction Multiple Data) instructions using a general purpose register file and a general purpose functional unit. Since GPU is a device specially for executing graphics and image operations as well as scientific computations without support for multilayer artificial neural network operations, a great amount of front-end decoding is needed for multilayer artificial neural network operations, thus producing plenty of additional overheads. Besides, since GPU only contains small on-chip cache, model data (weights) of the multilayer artificial neural network needs to be moved repeatedly from off-chip, and off-chip bandwidth has become the main performance bottleneck. Besides, since GPU only contains small on-chip cache, model data (weights) of the multilayer artificial neural network needs to be moved repeatedly from off-chip, and off-chip bandwidth has become the main performance bottleneck, causing huge power consumption.

Some prior arts can be seen from the following documents D0 to D8.

| | |
|---|---|
| D0 | P. O. DOMINGOS ET AL: "An efficient and scalable architecture for neural networks with backpropagation learning", PROCEEDINGS/2005 INTERNATIONAL CONFERENCE ONFIELD PROGRAMMABLE LOGIC AND APPLICATIONS (FPL): TAMPERE HALL, TAMPERE, FINLAND, AUGUST 24-26 ,2005, 1 January 2005 (2005-01-01), pages 89-94, Piscataway, NJ |
| D1 | RAMó N J ALIAGA ET AL: "System-on-Chip Implementation of Neural Network Training on FPGA", INTERNATIONAL JOURNAL ON ADVANCES IN SYSTEMS ANDMEASUREMENTS, vol. 2, no. 1, 30 June 2009 (2009-06-30), XP055604241 |
| D2 | EP 3407265 A1 (CAMBRICON TECH CORP LTD [CN]) 28 November 2018 (2018-11-28) |
| D3 | WO 2017/124644 A1 (CAMBRICON TECH CO LTD [CN]) 27 July 2017 (2017-07-27) |
| D4 | LIU DAOFU LIUDAOFU@ICT AC CN ET AL: "PuDianNao A Polyvalent Machine Leaming Accelerator", PROCEEDINGS OF THE TWENTIETH INTERNATIONAL CONFERENCE ON ARCHITECTURAL SUPPORT FOR PROGRAMMING LANGUAGES AND OPERATING SYSTEMS, ASPLOS'15, MARCH 14-18, 2015, ISTANBUL, TURKEY, ACMPUB27, NEW YORK, NY, USA, 14 March 2015 (2015-03-14), pages 369-381, |
| D5 | Tianshi Chen ET AL: "DianNao: A Small-Footprint High-Throughput Accelerator |
| | for Ubiquitous Machine-Learning", 1 March 2014 (2014-03-01), DOl: 10.1145/http://dx.doi.org/10.1145/2541940.2541967 Retrieved from the Internet: URL:http:/novel.ict.ac.cn/ychen/pdf/DianNao.pdf [retrieved on 2017-11-06] |
| D6 | JIANTAO QIU ET AL:"Going Deeper with Embedded FPGA Platform for Convolutional Neural Network", PROCEEDINGS OF THE 2016 ACM/SIGDA INTERNATIONAL SYMPOSIUM ON FIELD-PROGRAMMABLE GATE ARRAYS, FPGA'16, 1 January 2016 (2016-01-01), pages 26-35, New York,USA |
| D7 | YU QI ET AL: "A Deep Learning Prediction Process Accelerator Based FPGA", 2015 15TH IEEE/ACM INTERNATIONAL SYMPOSIUM ONCLUSTER, CLOUD AND GRID COMPUTING, IEEE, 4 May 2015 (2015-05-04), pages 1159-1162, |
| D8 | KLAPURI H ET AL: "MAPPING ARTIFICIAL NEURAL NETWORKSTO A TREE SHAPE NEUROCOMPUTER", MICROPROCESSORS AND MICROSYSTEMS, IPC BUSINESS PRESS LTD. LONDON, GB, vol. 20, no. 5, 1 September 1996 (1996-09-01), pages 267-276. |

D1 discloses the preamble of claim 1. SUMMARY

The present invention is defined in the appended claim set. The present disclosure provides a device for performing a backpropagation of artificial neural as defined by claim 1.

The present disclosure provides a method for executing backpropagation of an artificial neural network using the device of the present invention.

### BRIEF DESCRIPTION OF THE DRAWINGS

For a thorough understanding of the present disclosure and its advantages, a description will be given below with reference to the drawings, in which:
FIG. 1 is a block diagram of an overall structure of a device for performing backpropagation of a convolutional neural network according to an embodiment of the invention;
FIG. 2 is a structural diagram of an H tree unit of a device for performing backpropagation of a convolutional neural network according to the embodiment of the invention;
FIG. 3 is a block diagram of a structure of a master operation unit of a device for performing backpropagation of a convolutional neural network according to the embodiment of the invention;
FIG. 4 is a block block diagram of a structure of a slave operation unit of a device for performing backpropagation of a convolutional neural network according to the embodiment of the invention;
FIG. 5 is an exemplary block diagram of backpropagation of a convolutional neural network according to the embodiment of the invention;
FIG. 6 is a flowchart illustrating a process of a single-layer artificial neural network according to the embodiment of the invention;

In all the drawings, the same reference number denotes the same device, component, unit or the like.

### DETAILED DESCRIPTION

Based on the following detailed description of the embodiment of the present disclosure with reference to the drawings, other aspects, advantages and prominent features of the present disclosure will become apparent to those skilled in the art.

In the present disclosure, terms like "comprise", "include" and their own derivatives means comprisal, rather than restriction; and the term "or" is inclusive, with a meaning of "and/or" . Besides, for the sake of clarity and briefness, descriptions of those commonly known functions and structures are omitted. Furthermore, throughout all the drawings, the same reference numbers are used for marking the similar functions and operations.

A backpropagation of a multilayer artificial neural network according to the embodiment of the present disclosure comprises two or more layers of multiple neurons. For each layer, firstly, a weighted summation operation is performed on an input gradient vector to calculate an output gradient vector of the current layer. The output gradient vector is multiplied by a derivative value of an activation function of a next layer in a forward propagation, so that an input gradient vector for the next layer can be obtained. An element-wise multiplication is performed on the input gradient vector and an input neuron in the forward propagation to obtain a gradient of a weight of the current layer, and the weight of the current layer can be updated according to the obtained gradient of the weight of the current layer.

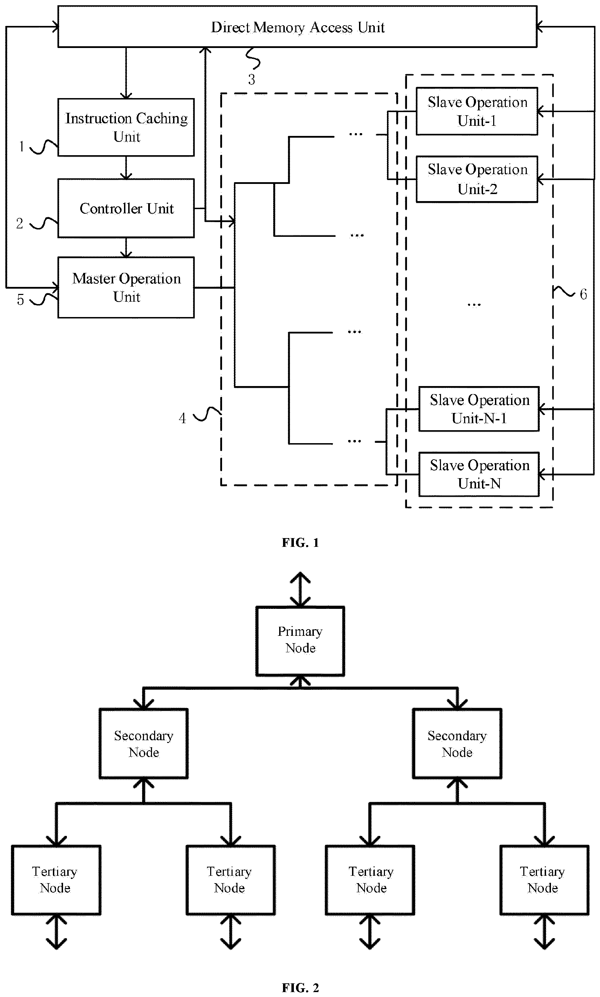

FIG. 1 is a block diagram of an overall structure of a device for performing backpropagation of a convolutional neural network according to an embodiment of the invention. As shown in FIG. 1, the device includes an instruction caching unit 1, a controller unit 2, a direct memory access unit 3, an H tree unit 4, a master operation unit 5, and a plurality of slave operation units 6. The instruction caching unit 1, the controller unit 2, the direct memory access unit 3, the H tree unit 4, the master operation unit 5, and the plurality of slave operation units 6 may all be implemented by a hardware circuit (such as an application specific integrated circuit (ASIC)).

The instruction caching unit 1 is configured to read an instruction through the direct memory access unit 3 and cache the instruction.

The controller unit 2 is configured to read the instruction from the instruction caching unit 1, decode the instruction into micro instructions for controlling behaviors of other units. comprising the master operation unit (5), the H tree unit (4) and the slave operation units (6). The other units, for example, may include further the direct memory access unit 3.

The direct memory access unit 3 is configured to access an external address space, directly read data from or write data to the each caching unit inside the device, and complete the loading and storage of the data.

FIG. 2 schematically shows a structure of the H tree unit. The H tree unit 4 acts as a data path between the master operation unit 5 and the plurality of slave operation units 6, and includes an H tree structure. The H tree structure has a binary tree path composed of a plurality of nodes. Each node transfers data received from an upstream node to two downstream nodes, merges data returned by the two downstream nodes and returns result of the merging to an upstream node. In the backpropagation of the neural network, vectors returned by the two downstream nodes are added together to a vector by the current node and transmitted to the upstream node. At the beginning of the computation of each layer of an artificial neural network, an input gradient vector of the master operation unit 5 is transmitted to the slave operation units 6 through the H tree unit 4. After the computation of the slave operation units 6 is completed, each two partial sums of output gradient vectors output by the slave operation units 6 are added together step by step in the H tree unit 4. In other words, a summation is performed on partial sums of all the output gradient vectors to obtain a final output gradient vector.

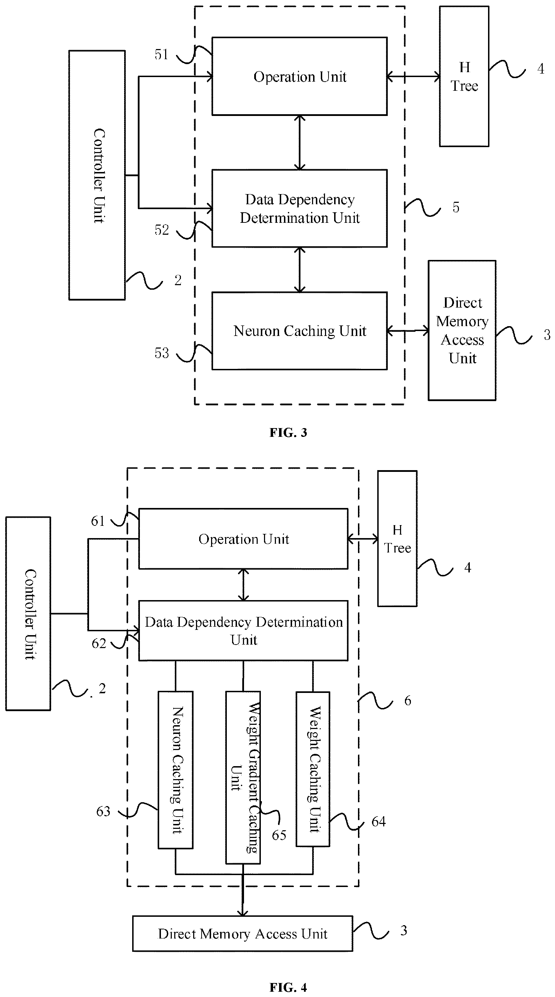

FIG. 3 is a block diagram of a structure of a master operation unit 5 of a device for performing backpropagation of a convolutional neural network according to the embodiment of the invention. As shown in FIG. 3, the master operation unit 5 includes an operation unit 51, a data dependency determination unit 52, and a neuron caching unit 53.

The neuron caching unit 53 is configured to cache input data and output data used by the master operation unit during computation. The operation unit 51 is configured to perform various operational functions of the master operation unit. The data dependency determination unit 52 is a port for the operation unit 51 to read/write the neuron caching unit 53, so as to ensure that there is no consistency conflict in reading data from or writing data to the neuron caching unit 53. Specifically, the data dependency determination unit 52 determines whether there is dependency between a microinstruction that has not been executed and data of a microinstruction that is being executed. If there is no dependency, the microinstruction is allowed to be issued immediately; otherwise, the microinstruction is not allowed to be issued until all microinstructions on which the microinstruction is dependent have been executed. For example, all microinstructions sent to the data dependency determination unit 52 are stored in the instruction queue inside the data dependency determination unit 52. In this queue, if a range of data to be read by a reading instruction conflicts with a range of data to be written by a writing instruction that is located at the front of the queue, the instruction can only be executed until a writing instruction depended by the instruction has been executed. At the same time, the data dependency determination unit 52 is also configured to send an input gradient vector read from the neuron caching unit 53 to the slave operation units 6 through the H tree unit 4. Output data of the slave operation units 6 is directly sent to the operation unit 51 through the H tree unit 4. An instruction output by the controller unit 2 is sent to the operation unit 51 and the data dependency determination unit 52 to control their behaviors.

FIG. 4 is a block diagram of a structure of a slave operation unit 6 of a device for performing backpropagation of a convolutional neural network according to the embodiment of the invention. As shown in FIG. 4, each slave operation unit 6 includes an operation unit 61, a data dependency determination unit 64, a neuron caching unit 65, a weight caching unit 64, and a weight gradient caching unit 65.

The operation unit 61 is configured to receive a microinstruction sent by the controller unit 2 and perform an arithmetic logic operation.

The data dependency determination unit 62 is configured to read or write the caching units during a computation process. The data dependency determination unit 62 ensures that there is no consistency conflict in reading data from or writing data to the caching units. Specifically, the data dependency determination unit 62 determines whether there is dependency between a microinstruction that has not been executed and data of a microinstruction that is being executed. If there is no dependency, the microinstruction is allowed to be issued immediately; otherwise, the microinstruction is not allowed to be issued until all microinstructions on which the microinstruction is dependent have been executed. For example, all microinstructions sent to the data dependency determination unit 62 are stored in the instruction queue inside the data dependency determination unit 62. In this queue, if a range of data to be read by a reading instruction conflicts with a range of data to be written by a writing instruction that is located at the front of the queue, the instruction can only be executed until a writing instruction depended by the instruction has been executed.

The neuron caching unit 63 is configured to cache data of input neuron vectors and partial sums of output gradient vectors obtained by the salve operation units 6.

The weight caching unit 64 is configured to cache weight vectors required for the slave operation units 6 in the computation process. Each slave operation unit 6 may only store a queue in a weight matrix corresponding to the slave operation unit 6.

The weight gradient caching unit 65 is configured to cache weight gradients required for a corresponding slave operation unit 6 in weight updating. The weight gradients stored in each slave operation unit 6 may corresponds to the weight vectors stored in the slave operation unit 6.

In the implementation of the backpropagation of the artificial neural network of each layer, the plurality of slave operation units 6 computes partial sums of corresponding output gradient vectors in parallel, and the plurality of slave operation units 6 updates the weights. For an artificial neural network full connected layer (e.g., an MLP) , the process is represented by the following equation: out_gradient = w*in_gradient, where the multiplication of the weight matrix w and the input gradient vector *in gradient* may be divided into uncorrelated and parallel computational tasks; *out_gradient* and *in_gradient* are column vectors; each slave operation unit only computes the product of the corresponding partial scalar element in *in_gradient* and the column corresponding to the weight matrix w; the output vectors obtained are partial sums to be accumulated of a final result, and each two of the partial sums are added together step by step in the H tree to obtain the final result. Therefore, the computation process becomes a process of partial sum computation in parallel and a process of subsequent accumulation. Each slave operation unit 6 computes partial sums of the output gradient vectors, and all the partial sums are summed in the H tree unit 4 to obtain a final output gradient vector. Each slave operation unit 6 simultaneously multiplies the input gradient vector and an output value of each layer in forward propagation to obtain the gradient of the weight, so as to update the weight stored in the slave operation unit 6. Forward propagation and backpropagation are the two main processes of neural network algorithms. To train (update) the weight in the network, the neural network firstly needs to compute a forward output of an input vector in the network formed by the current weight. This is the forward process. Then, the weight of each layer is trained (updated) layer by layer in reverse according to the difference between the output value and a labeled value of the input vector. In the forward propagation, the output vector and a derivative value of an activation function of each layer are stored for backpropagation. Therefore, these data are available at the beginning of the backpropagation. The output value of each layer in the forward propagation is existing data at the beginning of the backpropagation. The output value of each layer are cached in the master operation unit through the direct memory access unit and sent to the slave operation units through the H tree unit. The master operation unit 5 performs subsequent computations based on the output gradient vectors. An output gradient vector is multiplied by a derivative of the activation function in the forward propagation to obtain an output gradient vector of a next layer. The derivative of the activation function in the forward propagation is existing data at the beginning of the backpropagation and is cached in the master operation unit through the direct memory access unit.

According to an embodiment of the present disclosure, the aforementioned device is provided to execute an instruction set of backpropagation of an artificial neural network. The instruction set includes: a CONFIG instruction, a COMPUTE instruction, an IO instruction, a NOP instruction, a JUMP instruction, and a MOVE instruction.

The CONFIG instruction is used for configuring various constants required for computation of the current layer before the computation of artificial neural network of each layer begins.

The COMPUTE instruction is configured to complete arithmetical logic computation of artificial neural network of each layer.

The IO instruction is configured to read input data required for computation from an external address space, and store the data back to the external address space after the computation is completed.

The NOP instruction is configured to clear microinstructions in all microinstruction cache queues in the current device, and ensure that all instructions before the NOP instruction are completed. The NOP instruction itself does not include any operation.

The JUMP instruction is configured to control the jump of a next instruction address to be read from the instruction caching unit, so that the jump of control flow can be realized.

The MOVE instruction is configured to move data of an address in an internal address space of the device to another address in the internal address space of the device. This process is independent of an operation unit and does not occupy resources of the operation unit during execution.

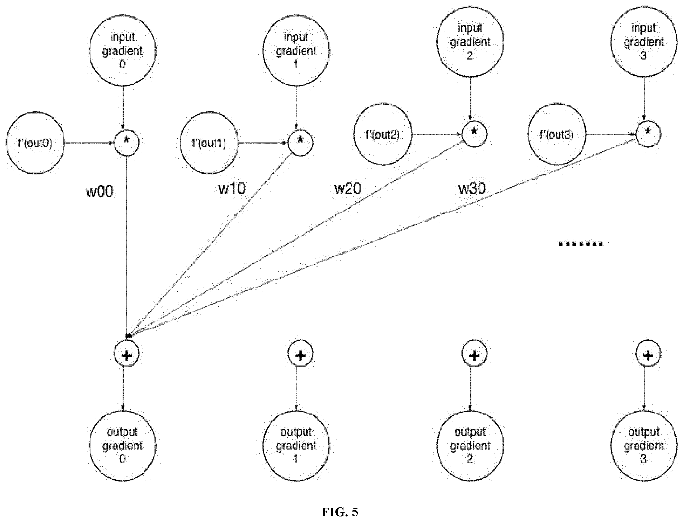

FIG. 5 is a block diagram of backpropagation of a convolutional ne ural network according to the embodiment of the invention. The process of comp uting the output gradient vector is represented by the following equation: out_grad ient = w * in_gradient, where the multiplication of the weight matrix w and the input gradient vector *in_gradient* are divided into uncorrelated and parallel computational tasks; each slave operation unit 6 computes the partial sum of the output gradient vecto r; and all the the partial sums are summed in the H tree unit 4 to obtain a final gradi ent vector. In Figure 5, the output gradient vector *input gradient* of the previous layer i s multiplied by the corresponding derivative of the activation function to obtain input d ata of the current layer, and then multiplied by the weight matrix to obtain an output g radient vector. The process of computing a weight update gradient is dw = x * in_grad ient, where each slave operation unit 6 computes the update gradient of part of the wei ght corresponding to the slave operation unit 6. The slave operation unit 6 multiplies th e input gradient and the input neuron in the forward propagation to obtain the weight update gradient dw', and updates the weight w using *w, dw* and the weight update dw used in the last weight updating according to the learning rate set by the instruction.

As shown in FIG. 5, *input gradient* ([input gradient0,..., input gradient3] in FI G. 5) is the output gradient vector of the n+1th layer. The output gradient vector is multiplied by the derivative value of the nth layer in the forward propagation ([f' (out0),...,f'(out3)] in FIG. 5) to obtain the input gradient vector of the nth layer. Th e process is completed in the master operation unit 5. The input gradient vector of the nth layer is sent to the slave operation units 6 and temporarily stored in the ne uron caching unit 63 of the slave operation units 6. Then, the input gradient vector is multiplied by the weight matrix to obtain the output gradient vector of the nth la yer. In this process, the i-th slave operation unit computes the product of the i-th sc alar in the input gradient vector and the column vector [w_i0,...,w_iN] in the weigh t matrix to obtain output vectors, and each two of the output vectors are added step by step in the H tree unit 4 to obtain the final output gradient vector *output gradi ent* ([output gradient0,..., output gradient3] in FIG. 5).

In addition, the slave operation units 6 also need to update the weights stored t herein. The process of computing the weight update gradient is dw_ij = x_j * in_gr adient_i, where *x*_*j* is the j-th element of the input vector of the nth layer (the outp ut of the n-1th layer) during the forward propagation, and *in _gradient_i* is the i-th e lement of the input gradient vector of the nth layer during the backpropagation (the product of the *input gradient* and the derivative *f'* in FIG. 5). The input of the nth layer in the forward propagation is data that exists at the beginning of the backpro pagation, which is sent to the slave operation units 6 and temporarily stored in the neuron caching unit 63. In the slave operation units 6, after the computation of the partial sum of the output gradient vector is completed, the i-th scalar of the input g radient vector is multiplied by the input vector of the n-th layer in the forward pro pagation to obtain the gradient vector dw with an updated weight, and the weight is updated accordingly.

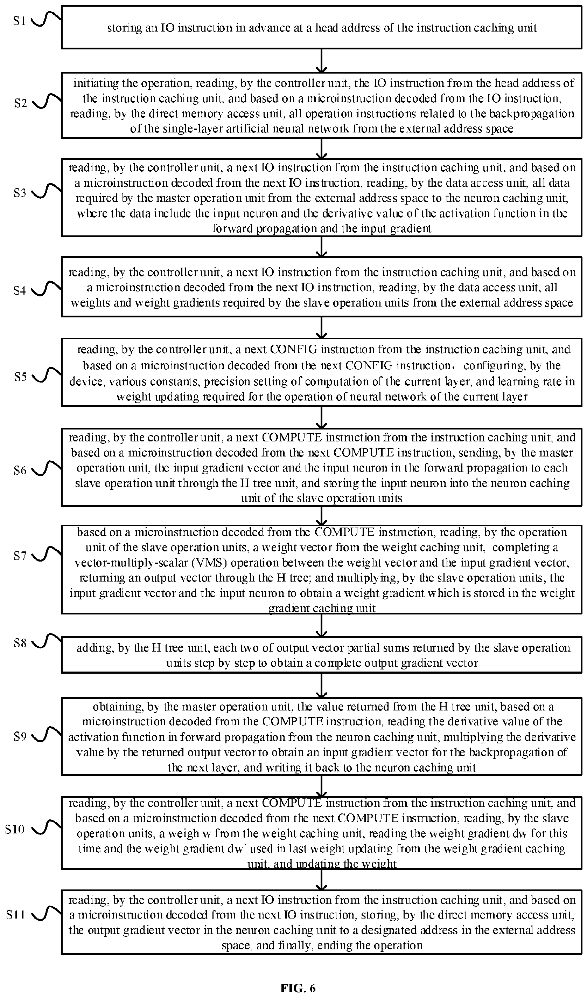

FIG. 6 is a flowchart illustrating a process of backpropagation of a single-layer artificial neural network according to the embodiment of the invention. This flowchart shows the process of implementing the backpropagation of the single-layer artificial neural network shown in FIG. 5 using the device and the instruction set of the present disclosure. The process includes:
a step S1, storing an IO instruction in advance at a head address of the instruction caching unit 1;
a step S2, initiating the operation, reading, by the controller unit 2, the IO instruction from the head address of the instruction caching unit 1, and based on a microinstruction decoded from the IO instruction, reading, by the direct memory access unit 3, all operation instructions related to the backpropagation of the single-layer artificial neural network from the external address space, and caching the operation instructions in the instruction caching unit 1;
a step S3, reading, by the controller unit 2, a next IO instruction from the instruction caching unit, and based on a microinstruction decoded from the next IO instruction, reading, by the data access unit 3, all data required by the master operation unit 5 from the external address space to the neuron caching unit 53 of the master operation unit 5, where the data include the input neuron and the derivative value of the activation function in the forward propagation and the input gradient vector;
a step S4, reading, by the controller unit 2, a next IO instruction from the instruction caching unit, and based on a microinstruction decoded from the next IO instruction, reading, by the data access unit 3, all weights and weight gradients required by the slave operation units 6 from the external address space, storing the weights into the weight caching unit 64 of the corresponding slave operation units 6, and storing the weight gradients into the weight gradient caching unit 65 of the corresponding slave operation units 6 respectively;
a step S5, reading, by the controller unit 2, a next CONFIG instruction from the instruction caching unit, and based on parameters in a microinstruction decoded from the next CONFIG instruction, configuring, by the operation unit, an value of a register inside the operation unit, comprising various constants, precision setting of computation of the current layer, and learning rate in weight updating required for the operation of neural network of the current layer;
a step S6, reading, by the controller unit 2, a next COMPUTE instruction from the instruction caching unit, and based on a microinstruction decoded from the next COMPUTE instruction, sending, by the master operation unit 5, the input gradient vector and the input neuron in the forward propagation to each slave operation unit 6 through the H tree unit 4, and storing the input gradient vector and the input neuron in the forward propagation into the neuron caching unit 63 of the slave operation units 6;
a step S7, based on a microinstruction decoded from the COMPUTE instruction, reading, by the operation unit 61 of the slave operation units 6, a weight vector (i.e. part of columns of the weight matrix stored by the corresponding slave operation unit 6) from the weight caching unit 64, completing a vector-multiply-scalar (VMS) operation between the weight vector and the input gradient vector, returning an output vector partial sum through the H tree; and multiplying, by the slave operation units 6, the input gradient vector and the input neuron to obtain a weight gradient which is stored in the weight gradient caching unit 65;
a step S8, adding, by the H tree unit 4, each two of output vector partial sums returned by the slave operation units 6 step by step to obtain a complete output gradient vector;
a step S9, obtaining, by the master operation unit 5, the value returned from the H tree unit 4, based on a microinstruction decoded from the COMPUTE instruction, reading the derivative value of the activation function in forward propagation from the neuron caching unit 53, multiplying the derivative value by the returned output vector to obtain an input gradient vector for the backpropagation of the next layer, and writing it back to the neuron caching unit 53;
a step S10, reading, by the controller unit 2, a next COMPUTE instruction from the instruction caching unit, and based on a microinstruction decoded from the next COMPUTE instruction, reading, by the slave operation units 6, a weight w from the weight caching unit 64, reading the weight gradient dw for this time and the weight gradient *dw'* used in last weight updating from the weight gradient caching unit, and updating the weight w; and
a step S11, reading, by the controller unit 2, a next IO instruction from the instruction caching unit, and based on a microinstruction decoded from the next IO instruction, storing, by the direct memory access unit 3, the output gradient vector in the neuron caching unit 53 to a designated address in the external address space, and finally, ending the operation.

The implementation procedures of a multilayer artificial neural network are similar to those of the single-layer artificial neural network. After the execution of the artificial neural network of the previous layer is completed, operation instructions of the next layer may take the output gradient vector obtained in the master operation unit as the input gradient vector for the training of the next layer, so as to perform the computation as above, where a weight address and a weight gradient address in the instructions may also be changed to addresses corresponding to the current layer.

By adopting the device and the instruction set for performing the backpropagation of the artificial neural network, problems such as insufficient operational performance of CPU and GPU, and large overhead for front-end decoding have been solved, while the support for the forward propogation of the multilayer artificial neural network has been effectively enhanced.

By adopting specialized on-chip cache directed to the backpropagation of the multilayer artificial neural network, reusability of the input neuron and weight data has been fully explored, while repeated reading of such data from memory has been avoided, memory access bandwidth has been reduced, and problem that memory bandwidth becomes a performance bottleneck of the forward operation of reusability multilayer artificial neural network has been averted.

The process or method as depicted in the foregoing drawings may be executed through processing logics including hardware (e.g. circuit, special logic, etc.), firmware, software (e.g. a software embodied in a non-transient computer readable medium), or combination of each two. Although the above describes the process or method in light of certain sequential operation, it should be understood that certain operation described herein may be executed in different orders. Additionally, some operations may be executed concurrently rather than sequentially.

In the above of the specification, embodiments of the present disclosure are expounded with reference to specific exemplary embodiments thereof. Correspondingly, the specification and accompanying drawings should be deemed as illustrative, rather than restrictive.

## Claims

1. A device for performing backpropagation of an artificial neural network, wherein the device comprises a controller unit (2), a direct memory access unit (3), an H tree unit (4), a master operation unit (5), and a plurality of slave operation units (6), wherein
the controller unit (2) is configured to read instructions and decode the instructions into micro-instructions for controlling behaviors of the H tree unit (4), the master operation unit (5), and the slave operation units (6);
the direct memory access unit (3) is connected with a caching unit (53) of the master operation unit (5) and also connected with caching units (63, 64, 65) of the slave operation units (6);
**characterized in that**
the direct memory access unit (3) is configured to:
- read first data from an external address space and write said first data to the caching unit (53) of the master operation unit (5), the first data comprising derivative values of an activation function and neurons input of a previous forward computation, and an input gradient vector;
- read second data from said caching unit (53) of the master operation unit (5) and write the second data to the external address space, said second data comprising an output gradient vector; and
- read third data from the external address space and write said third data to the caching units (63, 64, 65) of the slave operation units (6), said third data comprising weight data and weight gradient data needed by the slave operation units;
each i-th slave operation unit (6) is configured to:
- calculate a product between i-th scalar of the input gradient vector and a column vector (w_i0,...,w _iN) in the weight data stored in the caching units of the slave operation units (6);
- output said product to the H tree unit (4), the slave operation units (6) being further configured to multiply the input gradient vector by the neurons input to obtain a new weight gradient and, based on said new weight gradient, the cached weight data and the cached weight gradient data, update the weight value;
the H tree unit (4) is configured to:
- add together step-by-step in pairs the signals at the outputs of the slave operation units (6) in order to provide an output vector to the master operation unit (5); and
- transmit the input gradient vector and the neurons input from the master operation unit (5) to the slave operation units (6);
the master operation unit (5) is configured to multiply the output vector of the H tree unit by a corresponding derivative value read by the master operation unit (5) from the caching unit of the master operation unit (5) to obtain the output gradient vector, and to write the output gradient vector back to the caching unit of the master operation unit (5).

2. The device of claim 1, wherein
the slave operation units (6) of the device are configured to compute the weight gradients using the same input gradient vector in parallel, and update the weights using the obtained weight gradients respectively.

3. The device of any one of claims 1 to 2, wherein the master operation unit (5) comprises an operation unit, a data dependency determination unit, and the caching units (53) of the master operation unit (5) comprises a neuron caching unit, wherein
the neuron caching unit is configured to cache input data and output data used by the master operation unit (5) during computations;
the operation unit is configured to receive the output vector from the H tree unit (4) and complete various operational functions of the master operation unit (5); and
the data dependency determination unit is a port for the operation unit to read/write the neuron caching unit, configured to ensure that there is no consistency conflict in reading data from or writing data to the neuron caching unit, and the data dependency determination unit is configured to read an input neuron vector from the neuron caching unit, and send the input neuron vector to the slave operation units (6) through the H tree unit (4).

4. The device of any one of claims 1 to 3, wherein each slave operation unit (6) comprises an operation unit, a data dependency determination unit, and the caching units (63, 64, 65) of each slave operation units comprise a neuron caching unit, a weight caching unit, and a weight gradient caching unit, wherein
the operation unit is configured to receive a microinstruction sent by the controller unit (2) and perform an arithmetic logic operation;
the data dependency determination unit is configured to read data from or write data to the neuron caching unit, the weight caching unit, and the weight gradient caching unit during computations, and to ensure that there is no consistency conflict in reading data from or writing data to the neuron caching unit, the weight caching unit, and the weight gradient caching unit;
the neuron caching unit is configured to cache an input neuron vector and the product for the output gradient vector obtained by the salve operation unit (6);
the weight caching unit is configured to cache a weight vector required for the slave operation unit (6) in computation, and for each slave operation unit (6), the weight vector is the column vector in a weight matrix corresponding to the slave operation unit (6); and
the weight gradient caching unit is configured to cache the weight gradient required for the corresponding slave operation unit (6) in the weight updating, and the weight gradient stored in each slave operation unit (6) corresponds to the weight vector stored therein.

5. The device of claim 3 or 4, wherein in order to ensure that there is no consistency conflict in data reading/writing, the data dependency determination unit is configured to determine whether there is dependency between a microinstruction that has not been executed and data of a microinstruction that is being executed, if there is no dependency, the microinstruction is allowed to be issued immediately; otherwise, the microinstruction is not allowed to be issued until all microinstructions on which the microinstruction is dependent have been executed.

6. The device of any one of claims 1 to 5, wherein an instruction set supported by the device comprises a CONFIG instruction, a COMPUTE instruction, an IO instruction, an NOP instruction, a JUMP instruction, and a MOVE instruction, wherein
the CONFIG instruction is used for configuring various constants required for computation of a current layer before the computation of artificial neural network of each layer begins;
the COMPUTE instruction is configured to complete arithmetical logic computation of artificial neural network of each layer;
the IO instruction is configured to read input data required for computation from the external address space, and store the data back to the external address space after the computation is completed;
the NOP instruction is configured to clear microinstructions in all microinstruction cache queues in the current device, and ensure that all instructions before the NOP instruction are completed;
the JUMP instruction is configured to control jump of a next instruction address to be read from the instruction caching unit, so that the jump of control flow can be realized; and
the MOVE instruction is configured to move data of an address in an internal address space of the device to another address in the internal address space of the device.

7. The device of any one of claims 1 to 6, wherein at least one of the following units is implemented by an application specific integrated circuit: instruction caching unit, the controller unit, the direct memory access unit, the H tree unit, the master operation unit, and the plurality of slave operation units.

8. A method for performing backpropagation of an artificial neural network, wherein the method uses the device of any one of claims 1 to 7.

## Patentansprüche

1. Vorrichtung zum Durchführen von Rückvermehrung eines künstlichen neuronalen Netzes, wobei die Vorrichtung eine Steuereinheit (2), eine Direktspeicherzugriffseinheit (3), eine H-Baum-Einheit (4), eine Master-Operationseinheit (5) und eine Vielzahl von Slave-Operationseinheiten (6) umfasst, wobei
die Steuereinheit (2) konfiguriert ist, um Anweisungen zu lesen und die Anweisungen in Mikroanweisungen zum Steuern von Verhalten der H-Baum-Einheit (4), der Master-Operationseinheit (5) und der Slave-Operationseinheiten (6) zu dekodieren;
die Direktspeicherzugriffseinheit (3) mit einer Zwischenspeichereinheit (53) der Master-Operationseinheit (5) verbunden und auch mit Zwischenspeichereinheiten (63, 64, 65) der Slave-Operationseinheiten (6) verbunden ist;
**dadurch gekennzeichnet, dass**
die Direktspeicherzugriffseinheit (3) zu Folgendem konfiguriert ist:
- Lesen von ersten Daten aus einem externen Adressraum und Schreiben der ersten Daten in die Zwischenspeichereinheit (53) der Master-Operationseinheit (5), wobei die ersten Daten Ableitungswerte einer Aktivierungsfunktion und Neuroneneingabe einer vorherigen Vorwärtsberechnung und einen Eingabegradientenvektor umfassen;
- Lesen von zweiten Daten aus der Zwischenspeichereinheit (53) der Master-Operationseinheit (5) und Schreiben der zweiten Daten in den externen Adressraum, wobei die zweiten Daten einen Ausgabegradientenvektor umfassen; und
- Lesen von dritten Daten aus dem externen Adressraum und Schreiben der dritten Daten in die Zwischenspeichereinheiten (63, 64, 65) der Slave-Operationseinheiten (6), wobei die dritten Daten Gewichtsdaten und Gewichtsgradientendaten umfassen, die durch die Slave-Operationseinheiten benötigt werden;
jede i-te Slave-Operationseinheit (6) zu Folgendem konfiguriert ist:
- Berechnen eines Produkts zwischen i-tem Skalar des Eingabegradientenvektors und einem Spaltenvektor (w_i0,... ,w_iN) in den Gewichtsdaten, die in den Zwischenspeichereinheiten der Slave-Operationseinheiten (6) gespeichert sind;
- Ausgeben des Produkts an die H-Baum-Einheit (4), wobei die Slave-Operationseinheiten (6) ferner konfiguriert sind, um den Eingabegradientenvektor mit der Neuroneneingabe zu multiplizieren, um einen neuen Gewichtsgradienten zu erhalten, und basierend auf dem neuen Gewichtsgradienten, der zwischengespeicherten Gewichtsdaten und der zwischengespeicherten Gewichtsgradientendaten den Gewichtswert zu aktualisieren;
die H-Baum-Einheit (4) zu Folgendem konfiguriert ist:
- Schritt für Schritt in Paaren Zusammenfügen der Signale an den Ausgaben der Slave-Operationseinheiten (6), um der Master-Operationseinheit (5) einen Ausgabevektor bereitzustellen; und
- Übertragen des Eingabegradientenvektors und der Neuroneneingabe von der Master-Operationseinheit (5) an die Slave-Operationseinheiten (6);
die Master-Operationseinheit (5) konfiguriert ist, um den Ausgabevektor der H-Baum-Einheit mit einem entsprechenden Ableitungswert, der durch die Master-Operationseinheit (5) aus der Zwischenspeichereinheit der Master-Operationseinheit (5) gelesen wird, zu multiplizieren, um den Ausgabegradientenvektor zu erhalten, und um den Ausgabegradientenvektor zurück in die Zwischenspeichereinheit der Master-Operationseinheit (5) zu schreiben.

2. Vorrichtung nach Anspruch 1, wobei die Slave-Operationseinheiten (6) der Vorrichtung konfiguriert sind, um die Gewichtsgradienten unter Verwendung des gleichen Eingabegradientenvektors parallel zu berechnen und die Gewichte jeweils unter Verwendung der erhaltenen Gewichtsgradienten zu aktualisieren.

3. Vorrichtung nach einem der Ansprüche 1 bis 2, wobei die Master-Operationseinheit (5) eine Operationseinheit, eine Datenabhängigkeitsbestimmungseinheit umfasst und die Zwischenspeichereinheiten (53) der Master-Operationseinheit (5) eine Neuronenzwischenspeichereinheit umfassen, wobei
die Neuronenzwischenspeichereinheit konfiguriert ist, um Eingabedaten und Ausgabedaten, die durch die Master-Operationseinheit (5) während Berechnungen verwendet werden, zwischenzuspeichern;
die Operationseinheit konfiguriert ist, um den Ausgabevektor von der H-Baum-Einheit (4) zu empfangen und verschiedene Operationsfunktionen der Master-Operationseinheit (5) abzuschließen; und
die Datenabhängigkeitsbestimmungseinheit ein Port für die Operationseinheit zum Lesen/Schreiben der Neuronenzwischenspeichereinheit ist, der konfiguriert ist, um sicherzustellen, dass es keinen Konsistenzkonflikt beim Lesen von Daten aus oder Schreiben von Daten in die Neuronenzwischenspeichereinheit gibt, und die Datenabhängigkeitsbestimmungseinheit konfiguriert ist, um einen Eingabeneuronenvektor aus der Neuronenzwischenspeichereinheit zu lesen und den Eingabeneuronenvektor an die Slave-Operationseinheiten (6) durch die H-Baum-Einheit (4) zu senden.

4. Vorrichtung nach einem der Ansprüche 1 bis 3, wobei jede Slave-Operationseinheit (6) eine Operationseinheit, eine Datenabhängigkeitsbestimmungseinheit umfasst und die Zwischenspeichereinheiten (63, 64, 65) jeder Slave-Operationseinheit eine Neuronenzwischenspeichereinheit, eine Gewichtszwischenspeichereinheit und eine Gewichtsgradientenzwischenspeichereinheit umfassen, wobei
die Operationseinheit konfiguriert ist, um eine Mikroanweisung zu empfangen, die durch die Steuereinheit (2) gesendet wird, und eine arithmetische Logikoperation durchzuführen;
die Datenabhängigkeitsbestimmungseinheit konfiguriert ist, um Daten aus der Neuronenzwischenspeichereinheit, der Gewichtszwischenspeichereinheit und der Gewichtsgradientenzwischenspeichereinheit während Berechnungen zu lesen oder Daten darin zu schreiben und um sicherzustellen, dass es keinen Konsistenzkonflikt beim Lesen von Daten aus oder Schreiben von Daten in die Neuronenzwischenspeichereinheit, die Gewichtszwischenspeichereinheit und die Gewichtsgradientenzwischenspeichereinheit gibt;
die Neuronenzwischenspeichereinheit konfiguriert ist, um einen Eingabeneuronenvektor und das Produkt für den Ausgabegradientenvektor, der durch die Salve-Operationseinheit (6) erhalten wird, zwischenzuspeichern;
die Gewichtszwischenspeichereinheit konfiguriert ist, um einen Gewichtsvektor, der für die Slave-Operationseinheit (6) bei Berechnung erforderlich ist, zwischenzuspeichern, und für jede Slave-Operationseinheit (6) der Gewichtsvektor der Spaltenvektor in einer Gewichtsmatrix ist, die der Slave-Operationseinheit (6) entspricht; und
die Gewichtsgradientenzwischenspeichereinheit konfiguriert ist, um den Gewichtsgradienten, der für die entsprechende Slave-Operationseinheit (6) in der Gewichtsaktualisierung erforderlich ist, zwischenzuspeichern, und der Gewichtsgradient, der in jeder Slave-Operationseinheit (6) gespeichert ist, dem Gewichtsvektor entspricht, der darin gespeichert ist.

5. Vorrichtung nach Anspruch 3 oder 4, wobei, um sicherzustellen, dass es keinen Konsistenzkonflikt beim Lesen/Schreiben von Daten gibt, die Datenabhängigkeitsbestimmungseinheit konfiguriert ist, um zu bestimmen, ob es Abhängigkeit zwischen einer Mikroanweisung, die nicht ausgeführt worden ist, und Daten einer Mikroanweisung, die ausgeführt wird, gibt, wenn es keine Abhängigkeit gibt, die Mikroanweisung sofort ausgegeben werden darf; andernfalls die Mikroanweisung nicht ausgegeben werden darf, bis alle Mikroanweisungen, von denen die Mikroanweisung abhängig ist, ausgeführt worden sind.

6. Vorrichtung nach einem der Ansprüche 1 bis 5, wobei ein Anweisungssatz, der durch die Vorrichtung unterstützt wird, eine KONFIG-Anweisung, eine BERECHNEN-Anweisung, eine IO-Anweisung, eine NOP-Anweisung, eine SPRINGEN-Anweisung und eine BEWEGEN-Anweisung umfasst, wobei
die KONFIG-Anweisung zum Konfigurieren von verschiedenen Konstanten verwendet wird, die für Berechnung einer aktuellen Schicht benötigt werden, bevor die Berechnung des künstlichen neuronalen Netzes jeder Schicht beginnt;
die BERECHNEN-Anweisung konfiguriert ist, um arithmetisch-logische Berechnung des künstlichen neuronalen Netzes jeder Schicht abzuschließen;
die IO-Anweisung konfiguriert ist, um Eingabedaten, die für Berechnung benötigt werden, von dem externen Adressraum zu lesen und die Daten zurück in den externen Adressraum zu speichern, nachdem die Berechnung abgeschlossen ist;
die NOP-Anweisung konfiguriert ist, um Mikroanweisungen in allen Mikroanweisungszwischenspeicherwarteschlangen in der aktuellen Vorrichtung zu löschen und sicherzustellen, dass alle Anweisungen vor der NOP-Anweisung abgeschlossen sind;
die SPRINGEN-Anweisung konfiguriert ist, um Springen einer nächsten Anweisungsadresse zu steuern, die von der Anweisungszwischenspeichereinheit zu lesen ist, sodass das Springen von Steuerfluss realisiert werden kann; und
die BEWEGEN-Anweisung konfiguriert ist, um Daten einer Adresse in einem internen Adressraum der Vorrichtung zu einer anderen Adresse in dem internen Adressraum der Vorrichtung zu bewegen.

7. Vorrichtung nach einem der Ansprüche 1 bis 6, wobei zumindest eine der folgenden Einheiten durch eine anwendungsspezifische integrierte Schaltung implementiert ist: Anweisungszwischenspeichereinheit, die Steuereinheit, die Direktspeicherzugriffseinheit, die H-Baum-Einheit, die Master-Operationseinheit und die Vielzahl von Slave-Operationseinheiten.

8. Verfahren zum Durchführen von Rückvermehrung eines künstlichen neuronalen Netzes, wobei das Verfahren die Vorrichtung nach einem der Ansprüche 1 bis 7 verwendet.

## Revendications

1. Dispositif permettant d'effectuer une rétropropagation d'un réseau de neurones artificiels, ledit dispositif comprenant une unité de commande (2), une unité d'accès direct à la mémoire (3), une unité d'arbre H (4), une unité d'opération maîtresse (5) et une pluralité d'unités d'opération esclaves (6),
ladite unité de commande (2) étant configurée pour lire des instructions et décoder les instructions en micro-instructions pour commander des comportements de l'unité d'arbre H (4), de l'unité d'opération maîtresse (5) et des unités d'opération esclaves (6) ;
ladite unité d'accès direct à la mémoire (3) étant connectée à une unité de mise en cache (53) de l'unité d'opération maîtresse (5) et également connectée à des unités de mise en cache (63, 64, 65) des unités d'opération esclaves (6) ;
**caractérisé en ce que**
l'unité d'accès direct à la mémoire (3) est configurée pour :
- lire des premières données à partir d'un espace d'adressage externe et écrire lesdites premières données dans l'unité de mise en cache (53) de l'unité d'opération maîtresse (5), les premières données comprenant des valeurs dérivées d'une fonction d'activation et d'une entrée de neurones d'un calcul direct précédent, et un vecteur de gradient d'entrée ;
- lire des deuxièmes données à partir de ladite unité de mise en cache (53) de l'unité d'opération maîtresse (5) et écrire les deuxièmes données dans l'espace d'adressage externe, lesdites deuxièmes données comprenant un vecteur de gradient de sortie ; et
- lire des troisièmes données à partir de l'espace d'adressage externe et écrire lesdites troisièmes données dans les unités de mise en cache (63, 64, 65) des unités d'opération esclaves (6), lesdites troisièmes données comprenant des données de pondération et des données de gradient de pondération nécessaires aux unités d'opération esclaves ;
chaque i-ième unité d'opération esclave (6) est configurée pour :
- calculer un produit entre le i-ième scalaire du vecteur de gradient d'entrée et un vecteur de colonne (w_i0, ..., w_iN) dans les données de pondération stockées dans les unités de mise en cache des unités d'opération esclaves (6) ;
- délivrer en sortie ledit produit vers l'unité d'arbre H (4), les unités d'opération esclaves (6) étant en outre configurées pour multiplier le vecteur de gradient d'entrée par l'entrée de neurones pour obtenir un nouveau gradient de pondération, et, sur la base dudit nouveau gradient de pondération, des données de pondération mises en cache et des données de gradient de pondération mises en cache, mettre à jour la valeur de pondération ;
l'unité d'arbre H (4) est configurée pour :
- additionner ensemble pas à pas par paires les signaux au niveau des sorties des unités d'opération esclaves (6) afin de fournir un vecteur de sortie à l'unité d'opération maîtresse (5) ; et
- transmettre le vecteur de gradient d'entrée et l'entrée de neurones de l'unité d'opération maîtresse (5) aux unités d'opération esclaves (6) ;
l'unité d'opération maîtresse (5) est configurée pour multiplier le vecteur de sortie de l'unité d'arbre H par une valeur dérivée correspondante lue par l'unité d'opération maîtresse (5) à partir de l'unité de mise en cache de l'unité d'opération maîtresse (5) pour obtenir le vecteur de gradient de sortie, et pour réécrire le vecteur de gradient de sortie dans l'unité de mise en cache de l'unité d'opération maîtresse (5).

2. Dispositif selon la revendication 1,
lesdites unités d'opération esclaves (6) du dispositif étant configurées pour calculer
les gradients de pondération à l'aide
du même vecteur de gradient d'entrée en parallèle et mettre à jour les pondérations à l'aide respectivement des gradients de pondération obtenus.

3. Dispositif selon l'une quelconque des revendications 1 à 2, ladite unité d'opération maîtresse (5) comprenant une unité d'opération et une unité de détermination de dépendance de données, et lesdites unités de mise en cache (53) de l'unité d'opération maîtresse (5) comprenant une unité de mise en cache de neurones,
ladite unité de mise en cache de neurones étant configurée pour mettre en cache des données d'entrée et des données de sortie utilisées par l'unité d'opération maîtresse (5) pendant des calculs ;
ladite unité d'opération étant configurée pour recevoir le vecteur de sortie en provenance de l'unité d'arbre H (4) et effectuer diverses fonctions opérationnelles de l'unité d'opération maîtresse (5) ; et
ladite unité de détermination de dépendance de données étant un port permettant à l'unité d'opération de lire l'unité de mise en cache de neurones et d'écrire dans cette-dernière, configurée pour garantir qu'aucun conflit de cohérence n'existe lors de la lecture de données à partir de l'unité de mise en cache de neurones ou lors de l'écriture de données dans celle-ci, et ladite unité de détermination de dépendance de données étant configurée pour lire un vecteur de neurones d'entrée à partir de l'unité de mise en cache de neurones, et envoyer le vecteur de neurones d'entrée aux unités d'opération esclaves (6) par l'intermédiaire de l'unité d'arbre H (4).

4. Dispositif selon l'une quelconque des revendications 1 à 3, chaque unité d'opération esclave (6) comprenant une unité d'opération et une unité de détermination de dépendance de données, et lesdites unités de mise en cache (63, 64, 65) de chaque unité d'opération esclave comprenant une unité de mise en cache de neurones,
une unité de mise en cache de pondérations et une unité de mise en cache de gradients de pondération,
ladite unité d'opération étant configurée pour recevoir une micro-instruction envoyée par l'unité de commande (2) et effectuer une opération arithmétique et logique ;
ladite unité de détermination de dépendance de données étant configurée pour lire des données à partir de l'unité de mise en cache de neurones, de l'unité de mise en cache de pondérations et de l'unité de mise en cache de gradients de pondération pendant
des calculs ou pour écrire des données dans celles-ci, et pour garantir qu'aucun conflit de cohérence n'existe lors de la lecture de données à partir de l'unité de mise en cache de neurones, de l'unité de mise en cache de pondérations et de l'unité de mise en cache de gradients de pondération ou lors de l'écriture de données dans celles-ci ;
ladite unité de mise en cache de neurones étant configurée pour mettre en cache un vecteur de neurones d'entrée et le produit du vecteur de gradient de sortie obtenu par l'unité d'opération esclave (6) ;
ladite unité de mise en cache de pondérations étant configurée pour mettre en cache un vecteur de pondération requis par l'unité d'opération esclave (6) pendant le calcul, et pour chaque unité d'opération esclave (6) ledit vecteur de pondération étant le vecteur de colonne dans une matrice de pondération correspondant à l'unité d'opération esclave (6) ; et
ladite unité de mise en cache de gradients de pondération étant configurée pour mettre en cache le gradient de pondération requis par
l'unité d'opération esclave (6) correspondante pendant la mise à jour de pondérations, et ledit gradient de pondération stocké dans chaque unité d'opération esclave (6) correspondant au vecteur de pondération stocké dans celle-ci.

5. Dispositif selon la revendication 3 ou 4, ladite unité de détermination de dépendance de données étant configurée, afin de garantir qu'aucun conflit de cohérence n'existe lors de la lecture/écriture de données, pour déterminer si une dépendance existe entre une micro-instruction qui n'a pas été exécutée et des données d'une micro-instruction qui est en cours d'exécution, si aucune dépendance n'existe, ladite micro-instruction étant autorisée à être émise immédiatement ; sinon, ladite micro-instruction n'étant pas autorisée à être émise jusqu'à ce que toutes les micro-instructions dont dépend la micro-instruction aient été exécutées.

6. Dispositif selon l'une quelconque des revendications 1 à 5, un ensemble d'instructions pris en charge par le dispositif comprenant une instruction CONFIG, une instruction COMPUTE, une instruction IO, une instruction NOP, une instruction JUMP et une instruction MOVE,
ladite instruction CONFIG étant utilisée pour configurer diverses constantes requises pour un calcul d'une couche actuelle avant le début du calcul d'un réseau de neurones artificiels de chaque couche ;
ladite instruction COMPUTE étant configurée pour effectuer le calcul arithmétique et logique du réseau de neurones artificiels de chaque couche ;
ladite instruction IO étant configurée pour lire des données d'entrée requises par un calcul à partir de l'espace d'adressage externe et restocker les données dans l'espace d'adressage externe une fois le calcul effectué ;
ladite instruction NOP étant configurée pour effacer des micro-instructions dans toutes les files d'attente de mise en cache de micro-instructions du dispositif actuel et garantir que toutes les instructions avant l'instruction NOP soient effectuées ;
ladite instruction JUMP étant configurée pour commander un saut d'une adresse d'instruction suivante à lire à partir de l'unité de mise en cache d'instructions, afin que le saut du flux de commande puisse être réalisé ; et
ladite instruction MOVE étant configurée pour déplacer des données d'une adresse d'un espace d'adressage interne du dispositif vers une autre adresse de l'espace d'adressage interne du dispositif.

7. Dispositif selon l'une quelconque des revendications 1 à 6, au moins l'une des unités suivantes étant mise en œuvre par un circuit intégré spécifique à l'application : l'unité de mise en cache d'instructions, l'unité de commande, l'unité d'accès direct à la mémoire, l'unité d'arbre H, l'unité d'opération maîtresse et la pluralité d'unités d'opération esclaves.

8. Procédé permettant d'effectuer une rétropropagation d'un réseau de neurones artificiels, ledit procédé utilisant le dispositif selon l'une quelconque des revendications 1 à 7.
